# EUROPEAN PATENT SPECIFICATION

(11) **EP 2 871 967 B1**
(45) Date of publication and mention of the grant of the patent: **21.10.2015**
(21) Application number: 13728376.8
(22) Date of filing: 11.06.2013
(51) Int. Cl.: A23F 3/06

(54) **A PROCESS FOR PRODUCING A TEA PRODUCT**
VERFAHREN ZUR HERSTELLUNG EINES TEEPRODUKTS
PROCÉDÉ DE FABRICATION D'UN PRODUIT DE THÉ

(30) Priority: 11.07.2012 EP 12175943
(43) Date of publication of application: 20.05.2015
(73) Proprietor: Unilever N.V., 3013 AL Rotterdam (NL); Unilever PLC, London, Greater London EC4Y 0DY (GB)
(72) Inventor: BANDYOPADHYAY, Prasun, Whitefield Bangalore 560 066 (IN); GHOSH, Chandra, Sekhar, Whitefield Bangalore 560 066 (IN); MUKHOPADHYAY, Reshmee, Whitefield Bangalore 560 066 (IN)
(74) Representative: Keenan, Robert Daniel
(86) International application number: PCT/EP2013/061991
(87) International publication number: WO 2014/009078

(56) References cited:
- WO-A1-2012/069323
- JP-A- 62 087 047
- KR-A- 2009 124 269
- DATABASE WPI Week 200914 Thomson Scientific, London, GB; AN 2009-E77442 XP002688951, & JP 2009 017839 A (GH KOSANGYO SOSEI DAIGAKUIN DAIGAKU) 29 January 2009 (2009-01-29)
- DATABASE FSTA [Online] INTERNATIONAL FOOD INFORMATION SERVICE (IFIS), FRANkFURT-MAIN, DE; RAMASWAMY S ET AL: "Factors responsible for blackness of CTC teas.", XP002688952, Database accession no. FS-1983-09-H-1290 & RAMASWAMY, S.; THANARAJ, S. N. S.: UNITED PLANTERS ASSOCIATION OF SOUTHERN INDIA, TEA SCIENTIFIC DEPARTMENT, BULLETIN, no. 37, 1981, pages 45-65,
- DATABASE EPODOC [Online] EUROPEAN PATENT OFFICE, THE HAGUE, NL; XP002689092, Database accession no. GE-AP1998003168-A cited in the application & GE P20 001 998 B (MIRZA) 10 March 2000 (2000-03-10) cited in the application

## Description

### Technical Field

The present invention relates to a process for producing a black tea product having a high polyphenol content.

### Background and prior art

Most tea consumed is green tea or black tea. Green tea contains a high amount of catechins with no perceivable amount of theaflavins whereas black tea contains a higher amount of theaflavins and a lower amount of catechins than green tea. The taste of black tea is different from that of green tea. Some consumers prefer green tea and others prefer black tea. Consumers who prefer black tea are unable to get the health benefits of catechins because the amount of catechins in black tea is lower than green tea.

Treatments to increase the total polyphenols in black tea infusions are known. GE20001998 (Mirza et. al., 2000) discloses a method comprising withering, twisting, sorting and fermenting tea leaves, and then treating them with infra-red rays and drying the tea leaves. The fermentation is effected in two stages: after the first stage (40 - 50 minutes), the tea leaves are treated with hot air at 50-60°C or by infra-red rays having an intensity of 2-4 kW/m² at a specific loading of 1.5-3 kg/ m² of the tea mass for 4-8 minutes to a residual humidity of 30-40 percent of the tea leaves. Then the second stage of fermentation takes place (4-6 hours). Drying is effected by infra-red rays having an intensity of 6-9 kW/m² at a specific loading 2.5-4 kg/ m² of the tea mass for 6-12 minutes or at a temperature of 80-90°C.

KR20090124269 (SEO et. al., 2011) discloses a method for increasing the content of GABA of a green tea comprising the step of treating a green tea in the tea field for 2-4 hours after sunset for 30 days before leaf collection by using at least one treatment selected from the group consisting of far infrared treatment with 100-250W far infrared rays, visible light treatment with 200W visible rays and ultraviolet light treatment with 10-40W UV rays.

PCT Patent Application 2012/069323 discloses a process for producing a black leaf tea product having an increased catechin content by freezing freshly plucked tea leaves, then exposing the frozen leaf to air at room temperature for 4 hours, and then drying the leaf to a moisture content of 3% at 100°C.

None of the prior art discloses a process by which one can increase the total polyphenol content, catechin content, theaflavin content and also deliver higher soluble solids in the end cup infusion.

Therefore there is a need for a tea product which contains a significant amount total polyphenols, catechins and theaflavins and which has the appearance and organoleptic properties of black tea, so that it is liked by consumers of black tea, and which delivers higher amount of soluble solids at the end cup infusion, without the addition of any exogenous catechins and/or theaflavins.

### Objects of the invention

It is therefore an object of the present invention to provide a black leaf tea product.

It is another object of the present invention to provide a black leaf tea product with relatively high amount of catechins and theaflavins without the addition of any exogenous catechins and/or theaflavins.

It is yet another object of the present invention to provide a black leaf tea product which provides an increased amount of soluble solids in the final infusion.

It is a further object of the present invention to provide a black leaf tea product with an increased amount of polyphenols.

We have found that fermenting macerated tea leaves whilst exposing them to radiation of particular wavelengths (especially visible and infrared radiation) and intensities at a particular temperature range provides a tea product with high amount of catechins and theaflavins.

### Summary of the invention

The present invention provides a process for preparing a black leaf tea product comprising the steps of:
a. comminuting fresh tea leaf thereby producing dhool; and,
b. fermenting the dhool whilst exposing it to radiation having a wavelength of from 0.3 to 100 µm and an intensity of from 0.4 to 50 kW/m² for 10 minutes to 3 hours at a temperature of 15-45 °C.

Any feature of one aspect of the present invention may be utilized in any other aspect of the invention. The word "comprising" is intended to mean "including" but not necessarily "consisting of" or "composed of." In other words, the listed steps or options need not be exhaustive. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

"Leaf tea product" means a tea product that contains tea leaves, buds and/or stem in an un-infused form, and that has been dried to a moisture content of less than 30% by weight, and usually has a water content in the range 1 to 10% by weight (i.e. "made tea"). "Fresh tea leaf/leaves" refers to tea leaves and/or stem that have never been dried to a water content of less than 30% by weight, and usually have water content in the range 60 to 90%. The tea leaf may be obtained from *Camellia sinensis var. sinensis* and/or *Camellia sinensis var. assamica.* Preferably the tea leaves comprise material from *var. assamica* as this variety naturally has a high level of tea actives.

After the plucking, the fresh tea leaf is subjected to comminution/maceration, in order to damage the tea leaf so that it releases enzymes which can then undergo fermentation to produce the necessary sensorials for tea. This is preferably carried out by crushing, tearing and curling (CTC). One or more CTC steps may be carried out. Other methods which lead to substantial damage of the tea leaf can also be used. The macerated tea leaf is known as dhool.

Before comminution/maceration the fresh tea leaf is preferably subjected to a withering step. Withering is a process where plucked tea leaf is allowed to lose moisture over a period of time preferably in a shallow trough where biochemical reactions occur causing formation of many beneficial compounds including aroma compounds. Preferably fresh dry air is passed in a regulated manner through the leaf to speed-up the moisture loss. Generally withering is carried out for a period of 10 to 18 hours, preferably for 12 to 16 hours.

During fermentation, the dhool is exposed to radiation having a wavelength of from 0.3 to 100 µm and an intensity of from 0.4 to 50 kW/m² for from 10 minutes to 3 hours at a temperature of 15-45 °C. "Fermentation" refers to the oxidative and hydrolytic process that tea undergoes when certain endogenous enzymes and substrates are brought together, e.g. by mechanical disruption of the cells by maceration of the leaves. During this process colourless catechins in the leaves are converted to a complex mixture of yellow and orange to dark-brown polyphenolic substances.

The intensity of the radiation energy is preferably from 0.4 to 40 kW/m², more preferably 0.4-30 kW/m². The wavelength is preferably less than 70 µm, more preferably less than 50 µm and most preferably in the range of 0.5-50 µm. The time of exposure is preferably from 30 minutes to 3 hours, more preferably from 45 minutes to 2 hours, most preferably from 60 minutes to 2 hours.

Any light source with the specified radiation energy intensity and wavelength may be used. Preferably the source is a lamp such as an IR lamp or a sun lamp. Generally, in a sun lamp, radiation is generated by a xenon arc lamp and filtered through an optical filter (coated quartz filter segment). An exhaust fan can control the internal temperature of the device. Typically the radiation from a sun lamp is 2-10% ultraviolet (UV), 30-55% visible and 45-68% Infrared (IR).

Preferably during fermentation the dhool is on a flat surface and the source of radiation is above the dhool. The distance between the dhool and the source of radiation is preferably 10-35 cm, more preferably 10-30 cm, and most preferably 10-25 cm.

Preferably during fermentation and exposure to the radiation, the dhool is continuously agitated to ensure that all of the dhool is equally exposed to the radiation energy. This can be done manually or by an automated system.

The temperature of the dhool during exposure is important. Too high a temperature with long exposure to radiation may burn the leaf. The temperature of the treatment is from 15-45°C, preferably 20 - 45°C, more preferably 25-40°C, most preferably 30 - 40°C. Since the radiation produces heat, the temperature of the dhool must be maintained in the required range by some arrangement, for example by circulating air which dissipates the heat generated by the radiation. The circulation of air is preferably carried out by a fan.

The invention will now be demonstrated with the help of examples, which are for the purpose of illustration, and in no way limit the scope of the invention.

### Examples

### Examples 1 - 6 and Comparative Examples A -C

Black leaf tea products according to the invention were prepared from fresh tea leaves of *Camellia Sinensis* collected from tea gardens in southern India. The tea leaves were withered for 18 hours in an open atmosphere at ∼25°C to reduce their moisture content to ∼72%. The leaves were then passed through a CTC 4 times to obtain macerated dhool. This dhool was then fermented for 30-90 minutes at a temperature of around 35°C whilst being exposed to radiation. The dhool was then dried in tray drier at 110°C to a moisture content of 5%. The Examples were made with different radiation intensities, wavelengths, fermentation times and temperatures. The distance between the light source and the dhool was 12 cm for all examples and comparative examples, except for Example 6, in which it was 25cm.

Two different radiation sources were used:
(i) a Sun lamp (SUNTEST CPS+ Sunlamp, Model No: 55007017, with a temperature controller), obtained from ATLAS Material Testing Solutions, GmbH, Germany. The light source was a Xenon Lamp and the wavelength range was from 0.35 to 0.9 µm (5% Ultraviolet, 45% visible and 50% Infrared).
(ii) an IR lamp (Short & Mid Wave Quartz T/T Infra Red emitter 23×11 with Gold Reflector, lamp length 430mm with cooling fan obtained from Heraeus Noblelight GmbH, Germany) with a wavelength range from 1 to 10µm

Control black tea products were prepared as comparative examples using the same procedure as above, except that:
- Example A: the dhool was fermented for around 60 minutes at ∼25°C without being exposed to radiation (i.e. a conventional process).
- Example B: the dhool was fermented for around 60 minutes under the sun lamp with a radiation intensity of 0.2 kW/m² (outside the scope of the invention) at a temperature of around 35°C.
- Example C: the dhool was fermented for around 60 minutes under the IR-lamp with a radiation intensity of 24 kW/m², at a temperature of around 55°C (outside the scope of the invention).

Infusions of the black leaf tea products were prepared by adding 100 mL of boiling water to 2g of the tea product, allowing it to stand for 2 minutes, stirring once and then straining. Theaflavin, catchin, and total polyphenol contents and total soluble solids of the infusions were measured, together with the colour (a* value), using the following methods.

### Theaflavins (TF) content:

Samples were analysed by HPLC using an octadecylsilica (C18) column (Novapak ex. Waters, 3.9 mm i.d. × 150 mm) with detection at a wavelength of 380 nm, column temperature of 40°C, injection volume of 20 µL and flow rate of 1 mL/min. The mobile phases were 2% (v/v) acetic acid in water (mobile phase A) and acetonitirile (mobile phase B). A linear gradient from 8% B to 69% B over 50 minutes was used to separate the theaflavins, following which the column was equilibrated with 8% of mobile phase A for 5 min. Pure theaflavins (Sigma Aldrich, > 90%, HPLC grade) were used as the standard for quantification.

### Catechin content:

Total catechin contents were determined using the ISO method for the determination of catechins in green and black tea, using high performance liquid chromatography (ISO 14502-2:2005).

### Total polyphenols (TPP) content:

Total polyphenols contents were determined using the ISO method for the determination of content of total polyphenols in tea - Colorimetric method using Folin-Cicalteu reagent (ISO 14502-1:2005).

### Total soluble solids (TSS) measurement:

The total soluble solids content was measured using (ISO9768:1994 (E)). A dry pan was placed in a hot air oven at 110°C for 2 hours. The pan was then placed in a dessicator for weighing. 2 g of black tea was placed in a paper cup, 100 mL of water at 100°C was added and the infusion was stirred for 2 minutes. The infusion was then filtered using a Whatman 541 filter paper. The filtrate was collected in a beaker and the volume made up 100 mL with deionised water.

The 100ml of hot tea liquor was put in the weighed pan and placed on a water bath at 90-100°C. After the water in the infusion had completely evaporated, the bottom of the pan was wiped with a clean cloth to remove any remaining water.

The pan was then placed in a hot air oven for drying for 12 hrs at 110°C. The final weight of the pan was taken and the initial weight was subtracted to obtain the amount of soluble solids in the infusion.

### Colour measurement:

CIE L*a*b* values were measured at room temperature (∼25°C) using an Ultrascan XE (Model-USXE/UNI version 3.4, Hunterlab Associates Laboratories Inc. Virginia). A halogen cycle lamp was used as the light source. The illuminant was D65 and the measurements were made at 10°observer angle. A quartz cuvette of 10 mm path length was filled up to the brim with the infusion and placed in the instrument for measurement. The instrument was calibrated using a standard white tile (Hunterlab Duffuse/8°, mode-RSEX, Port-1" and area-large) in accordance with the instruction manual. The maximum value for L* is 100, which represents a perfect reflecting diffuser. The minimum is L*=0, which represents black. The a* and b* axes have no specific numerical limits. Positive a* is red and negative a* is green. Similarly, positive b* is yellow and negative b* is blue. The higher the a* value, the redder the infusion is.

Table 1 shows the effect of varying the radiation intensity, for a fermentation / exposure time of 60 minutes. It is evident that Examples 1, 2 and 3 provide tea products which result in infusions with higher theaflavins, catechins, TSS, and TPP as well as being more red coloured (higher a* value).

**Table 1:**

| Example | Source of radiation | Intensity (kW/m²) | TF | Catechins | TSS | TPP | a* value |
|---|---|---|---|---|---|---|---|
| | | | mg/100mL | | | | |
| A | - | - | 5.6 | 21 | 0.38 | 110 | 27 |
| B | Sunlamp | 0.2 | 5.6 | 21 | 0.38 | 115 | 28 |
| 1 | Sunlamp | 0.5 | 6.3 | 22 | 0.41 | 123 | 29 |
| 2 | Sunlamp | 0.75 | 7.2 | 25 | 0.44 | 145 | 33 |
| 3 | IR-lamp | 24 | 7.8 | 24 | 0.42 | 145 | 31 |

Table 2 shows the effect of varying the fermentation / exposure time using the IR lamp (intensity: 24 kW/m²). It is evident that a fermentation / exposure time of 60 or 90 minutes results in products which produce infusions with higher theaflavins, catechins, TSS and TPP and also more red colour (higher a* value) than a time of 30 minutes.

**Table 2:**

| Example | Fermentation time (minutes) | TF | Catechins | TSS | TPP | a* Value |
|---|---|---|---|---|---|---|
| | | mg/100mL | | | | |
| 4 | 30 | 6.3 | 22 | 0.41 | 123 | 29 |
| 3 | 60 | 7.8 | 24 | 0.42 | 145 | 31 |
| 5 | 90 | 7.1 | 26 | 0.42 | 142 | 30 |

Table 3 shows the effect of varying the distance between the dhool and the source of radiation using the IR lamp (intensity: 24 kW/m²) with a fermentation / exposure time of 60 minutes. It is evident that the shorter distance between the dhool and the source of radiation resulted in a tea product which produced an infusion with higher amounts of theaflavins, catechins, TSS and TPP, and also a higher a* value.

**Table 3:**

| Example | Distance from the lamp (cm) | TF | Catechins | TSS | TPP | a* Value |
|---|---|---|---|---|---|---|
| | | mg/100mL | | | | |
| 3 | 12 | 7.8 | 24 | 0.42 | 145 | 31 |
| 6 | 25 | 6.3 | 22 | 0.41 | 123 | 28 |

Using a higher fermentation temperature (55°C) with the IR lamp (intensity: 24 kW/m²) and a fermentation / exposure time of 60 minutes (Comparative Example C) produced a tea product with a bunt/charred smell. The resulting infusion tasted like a burnt liquid and was not pleasant to consume. It is evident that this higher temperature is not suitable for the process of the invention.

### Example 7 and Comparative Examples D and E

Further black leaf tea products were prepared using the orthodox process for the production of black tea, instead of CTC, as follows. Fresh tea leaves of *Camellia Sinensis* were collected from tea gardens of southern India. The tea leaves were withered for nearly 18 hours to reduce the moisture content to around 60%. The withered leaves were then pressed by an orthodox roller for 2.5 hours. An orthodox roller consists of three parts- the table, the hood and the pressure cap. Rotation of the machine is achieved through three crank shafts attached to the table. The level gear mechanism transmits power to one of the crankshafts at a time, while the other two rotate freely on their bearings and play an auxiliary role. The pressure cap applies pressure to the leaf mass during rolling, imparting a twisting and brushing action. Then the tea leaves were fermented for 4 hours at atmospheric condition (temperature ∼25°C). Finally the fermented leaves were dried in tray drier at 100°C to reduce the moisture content to ∼5% (Comparative Example D).

Comparative Example E was produced in the same manner as Example D, except that during fermentation the leaves were exposed to radiation using the IR lamp (intensity 10 kW/m² and wavelength 1-10 µm) on two occasions, twice for 5 minutes each time. The first exposure took place after 50 minutes fermentation, and the second one for the final 5 minutes of the 4 hours fermentation period. This example represents the orthodox production of black tea with a very little IR exposure as in GE20001998.

Example 7 was produced in the same manner as Example D, except that the leaves were exposed to radiation using the IR lamp for the initial 60 minutes of fermentation (i.e. in accordance with the process of the invention).

Infusions were produced from the leaf tea products, and their total polyphenol and catechin contents were measured and are given in Table 4. It is evident that Example 7 provides a better quality tea with higher TPP and catechins than Comparative Examples D and E.

**Table 4:**

| Example | TPP | Catechins |
|---|---|---|
| | mg/100mL | |
| D | 24.94 | 9.77 |
| E | 24.46 | 9.78 |
| 7 | 32.66 | 15.35 |

## Claims

1. A process for preparing a black leaf tea product comprising the steps of:
a) comminuting fresh tea leaf thereby producing dhool; and,
b) fermenting the dhool whilst exposing it to radiation having a wavelength of from 0.3 to 100 µm and an intensity of from 0.4 to 50 kW/m² for 10 minutes to 3 hours at a temperature of 15-45 °C.

2. A process as claimed in claim 1 comprising an additional step of withering in between step (a) and step (b).

3. A process as claimed in claim 1 or claim 2 wherein the radiation intensity is in the range of 0.4 to 30 kW/m².

4. A process as claimed in any of claims 1 to 3 wherein the source of the radiation is a lamp.

5. A process as claimed in claim 4 wherein the lamp is an infrared lamp.

6. A process as claimed in claim 4 wherein the lamp is a sun lamp.

7. A process as claimed in any of claims 1 to 6 wherein the distance between the dhool and the source of the radiation is from 10 to 35 cm.

8. A process as claimed in any of claims 1 to 7 wherein the dhool is continuously agitated during fermentation.

9. A process as claimed in any of claims 1 to 8 wherein the temperature is maintained by circulating air.

10. A process as claimed in claim 9 wherein the air is circulated by a fan.

## Patentansprüche

1. Verfahren zum Zubereiten eines Schwarzteeprodukts, das die folgenden Schritte umfasst:
a) Zerkleinern eines frischen Teeblatts, wodurch Dhool erzeugt wird; und
b) Fermentieren des Dhool, während er einer Strahlung mit einer Wellenlänge von 0,3 bis 100 µm und einer Intensität von 0,4 bis 50 kW/m² für 10 Minuten bis 3 Stunden bei einer Temperatur von 15-45 °C ausgesetzt wird.

2. Verfahren nach Anspruch 1, das einen zusätzlichen Schritt zum Trocknen zwischen Schritt (a) und Schritt (b) umfasst.

3. Verfahren nach Anspruch 1 oder Anspruch 2, wobei die Strahlungsintensität im Bereich von 0,4 bis 30 kW/m² liegt.

4. Verfahren nach einem der Ansprüche 1 bis 3, wobei die Strahlungsquelle eine Lampe ist.

5. Verfahren nach Anspruch 4, wobei die Lampe eine Infrarotlampe ist.

6. Verfahren nach Anspruch 4, wobei die Lampe eine Sonnenlichtlampe ist.

7. Verfahren nach einem der Ansprüche 1 bis 6, wobei der Abstand zwischen dem Dhool und der Strahlungsquelle 10 bis 35 cm beträgt.

8. Verfahren nach einem der Ansprüche 1 bis 7, wobei der Dhool während der Fermentierung ununterbrochen bewegt wird.

9. Verfahren nach einem der Ansprüche 1 bis 8, wobei die Temperatur durch Zirkulieren von Luft aufrechterhalten wird.

10. Verfahren nach Anspruch 9, wobei die Luft durch ein Gebläse zirkuliert wird.

## Revendications

1. Procédé de préparation d'un produit de thé noir en feuilles comprenant les étapes consistant à :
a) broyer une feuille de thé fraiche produisant ainsi un broyat ; et,
b) faire fermenter le broyat tout en l'exposant à un rayonnement ayant une longueur d'onde de 0,3 à 100 µm et une intensité de 0,4 à 50 kW/m² pendant de 10 minutes à 3 heures à une température de 15-45°C.

2. Procédé selon la revendication 1 comprenant une étape supplémentaire de flétrissement entre l'étape (a) et l'étape (b).

3. Procédé selon la revendication 1 ou la revendication 2 dans lequel l'intensité du rayonnement est dans une plage de 0,4 à 30 kW/m².

4. Procédé selon l'une quelconque des revendications 1 à 3 dans lequel la source du rayonnement est une lampe.

5. Procédé selon la revendication 4 dans lequel la lampe est une lampe infrarouge.

6. Procédé selon la revendication 4 dans lequel la lampe est une lampe solaire.

7. Procédé selon l'une quelconque des revendications 1 à 6 dans lequel la distance entre le broyat et la source de rayonnement est de 10 à 35 cm.

8. Procédé selon l'une quelconque des revendications 1 à 7 dans lequel le broyat est agité de manière continue pendant la fermentation.

9. Procédé selon l'une quelconque des revendications 1 à 8 dans lequel la température est maintenue par circulation d'air.

10. Procédé selon la revendication 9 dans lequel l'air est mis en circulation par un ventilateur.
